# EUROPÄISCHE PATENTANMELDUNG

(11) **EP 1 382 433 A1**
(43) Veröffentlichungstag der Anmeldung: **21.01.2004**
(21) Anmeldenummer: 03015587.3
(22) Anmeldetag: 14.07.2003
(51) Int. Cl.: B29C 65/16

(54) **Verfahren zum Fügen von Kunststoffbauteilen mittels Laserstrahlung**

(30) Priorität: 16.07.2002 DE 10232727
(71) Anmelder: JENOPTIK Automatisierungstechnik GmbH, 07745 Jena (DE)
(72) Erfinder: Zühlke, Hans-Ulrich Dr., 07743 Jena (DE); Eberhardt, Gabriele, 07749 Jena (DE); Preuss, Norbert, 07743 Jena (DE)
(74) Vertreter: Bertram, Helmut

(57) **Zusammenfassung**

Bei einem Verfahren zum Fügen von Kunststoffbauteilen mittels Laserstrahlung besteht die Aufgabe, Beeinträchtigungen der Oberflächenqualität durch einen Materialeinfall der Qualitätsoberfläche bei dünnwandigen Kunststoffbauteilen zu vermeiden, wenn diese mit einem anderen Teil verbunden werden.

Ein erstes dünnwandiges und eine Qualitätsoberfläche aufweisendes Kunststoffbauteil ist absorbierend für die Laserstrahlung ausgebildet und wird an einer, der Qualitätsoberfläche gegenüberliegenden Seite mit einem zweiten, für die Laserstrahlung transparenten Kunststoffbauteil im Durchstrahlverfahren verschweißt, indem zur Verringerung des Temperaturgradienten zwischen den Kunststoffbauteilen beim Fügen das transparente Kunststoffbauteil zuvor aufgeheizt wird, so dass ein schnelleres, durch Wärmeleitung während des Fügens hervorgerufenes Aufschmelzen des transparenten Kunststoffbauteiles erfolgt und eine Wärmeausbreitung im absorbierenden Kunststoffbauteil in Richtung der Qualitätsoberfläche begrenzt wird.

## Beschreibung

Die Erfindung betrifft ein Verfahren zum Fügen von Kunststoffbauteilen mittels Laserstrahlung, bei dem ein erstes dünnwandiges und eine Qualitätsoberfläche aufweisendes Kunststoffbauteil absorbierend für die Laserstrahlung ausgebildet ist und an einer, der Qualitätsoberfläche gegenüberliegenden Seite mit einem zweiten, für die Laserstrahlung transparenten Kunststoffbauteil im Durchstrahlverfahren verschweißt wird.

In zunehmendem Maße werden Kfz-Karosserieteile zu Designelementen, die zur Gewährleistung einer hohen Oberflächengüte als Kunststoffabdeckungen ausgebildet und aus Gründen der Materialeinsparung und Gewichtsreduzierung sehr dünnwandig ausgeführt sind. Das führt vor allem bei der Zulieferindustrie zu immer häufiger auftretenden Problemen beim Fügen, weil Verstärkungs- oder Halteelemente mit dünnwandigen Thermoplastteilen verbunden werden müssen und dabei oftmals eine hohe Oberflächengüte zu gewährleisten ist.

Seit einiger Zeit ist es bekannt, thermoplastische Kunststoffe durch Laserschweißen im Durchstrahlverfahren miteinander zu verbinden. Dazu ist es erforderlich, dass eines der Teile transparent und das andere Teil absorbierend für die zum Einsatz kommende Laserstrahlung ausgebildet ist. Die Laserstrahlung durchdringt das transparente Teil und schmilzt das absorbierende Teil oberflächlich auf. Die sich ausdehnende Schmelze kommt mit dem transparenten Teil in Verbindung, so dass dieser durch den damit verbundenen Wärmeübergang ebenfalls aufgeschmolzen wird. In der Folge bildet sich wegen der Durchdringung der beiden Schmelzen eine Schweißverbindung aus.

Ein solches Verfahren, das die Herstellung einer dauerhaften Verbindung zwischen einem flächigen Kunststoffleichtbauteil mit einer Qualitätsoberfläche und einem Element betrifft, ist z. B. aus der gattungsbildenden DE 100 59 160 A1 bekannt. Das Element ist wenigstens in Teilbereichen für das Laserlicht transparent, wogegen das Kunststoffleichtbauteil das Laserlicht absorbiert und es ist gefordert, dass die durch Lichtabsorption von dem Kunststoffleichtbauteil aufgenommene Energie so gewählt werden soll, dass weder die geometrische noch die stoffliche Beschaffenheit der Qualitätsoberfläche beeinträchtigt wird.

Trotz der geringen Eindringtiefe der Laserstrahlung, die materialabhängig typisch zwischen 0,01 mm bis 0,2 mm liegt, hat es sich gezeigt, dass bei dünnwandigen Kunststoffbauteilen unterhalb von 2 mm Materialstärke eine thermische Beeinflussung der gesamten Materialdicke eintritt und es zu einer Beeinträchtigung der Oberflächenqualität auf der Seite mit der Qualitätsoberfläche infolge eines Materialeinfalls kommt. Dieser negative Effekt lässt sich auch nicht durch Maßnahmen vermeiden, die aus der DE 100 59 160 A1 bekannt sind.

Aufgabe der Erfindung ist es deshalb, Beeinträchtigungen der Oberflächenqualität durch einen Materialeinfall der Qualitätsoberfläche bei dünnwandigen Kunststoffbauteilen zu vermeiden, wenn diese mit einem anderen Teil verbunden werden.

Gemäß der Erfindung wird die Aufgabe durch ein Verfahren der eingangs genannten Art dadurch gelöst, dass zur Verringerung des Temperaturgradienten zwischen den Kunststoffbauteilen beim Fügen das transparente Kunststoffbauteil zuvor aufgeheizt wird, so dass ein schnelleres, durch Wärmeleitung während des Fügens hervorgerufenes Aufschmelzen des transparenten Kunststoffbauteils erfolgt und eine Wärmeausbreitung im absorbierenden Kunststoffbauteil in Richtung der Qualitätsoberfläche begrenzt wird.

Durch die vorliegende Erfindung entsteht eine Schweißverbindung ohne Beeinträchtigung der Qualitätsoberfläche des dünnwandigen Kunststoffbauteiles, da die Zeit zum Herstellen der Fügeverbindung verkürzt und die Tiefe, in die der Wärmeleitungsprozess im Material vordringt, verringert wird. Die bei dünnwandigen Materialien von 1 - 2 mm Dicke bei den bekannten Methoden auftretende thermische Beeinflussung der gesamten Materialdicke wird somit vermieden.

Bei der vorliegenden Erfindung kann das transparente Kunststoffbauteil als Trägerteil sowohl zur Verstärkung bzw. Versteifung des dünnwandigen Kunststoffbauteiles als auch zu dessen Befestigung dienen.

In einer bevorzugten Ausführung erfolgt das Aufheizen des transparenten Kunststoffbauteiles durch eine separate Wärmequelle.

Auf diese kann bei der vorliegenden Erfindung auch verzichtet werden, wenn das Material des transparenten Kunststoffbauteils so zusammengesetzt ist, dass die Aufheizung bereits durch eine Teilabsorption der Laserstrahlung bzw. einer Laserwellenlänge hervorgerufen wird.

Das ist von besonderer Bedeutung, wenn mit einem breitbandigen NIR-Strahler als Strahlungsquelle gearbeitet wird, da die Aufheizung dann durch eine wellenlängenselektive Ausbildung der Absorptions- und Transmissionseigenschaften des Materials hervorgerufen werden kann.

Für das Laserschweißen im Durchstrahlverfahren sind grundsätzlich Wellenlängen von 700 nm - 1200 nm geeignet.

Die Erfindung soll nachstehend anhand der schematischen Zeichnung näher erläutert werden. Es zeigen:
- Fig. 1: zwei Kunststoffbauteile vor dem Fügen, von denen ein für die Laserstrahlung transparentes Kunststoffbauteil mit einer separaten Wärmequelle vorgeheizt wird
- Fig. 2: eine Anordnung zum Fügen zweier Kunststoffbauteile

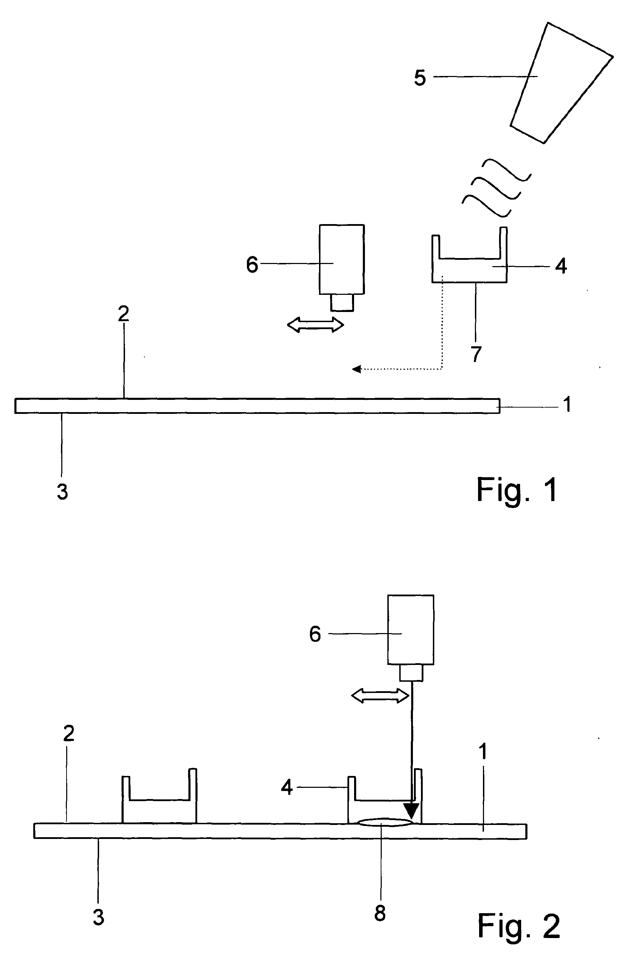

Von den in Fig. 1 dargestellten Kunststoffbauteilen ist eines ein dünnwandiges Spritzgussteil 1, das gegenüberliegend zu einer Fügefläche 2 eine Qualitätsoberfläche 3 aufweist und aus einem polymeren Material gefertigt ist, das eine beim Laserscheißen im Durchstrahlverfahren zum Einsatz kommende Laserstrahlung absorbiert. Das andere Kunststoffbauteil 4, welches vorzugsweise aus dem gleichen Polymer besteht wie das Spritzgussteil 1, wird mit Hilfe eines Wärmestrahlers 5 auf eine Temperatur von ca. 50°C unter seinem Schmelzpunkt aufgeheizt und anschließend in die zum Fügen mit dem Spritzgussteil 1 erforderliche Position gebracht.

Die beiden Kunststoffbauteile 1 und 4 werden mit einer nicht dargestellten mechanischen Haltevorrichtung zueinander fixiert und unter Einwirkung von Laserstrahlung einer Laserstrahlungsquelle 6, die z. B. als Hochleistungsdiodenlaser ausgebildet sein kann, miteinander verschweißt. Dabei sollte zwischen der Fügefläche 2 und einer Fügefläche 7 des Kunststoffbauteiles 4 ein möglichst geringes Spaltmaß vorhanden sein, um ein Aufschmelzen des transparenten Kunststoffbauteiles 4 zu ermöglichen.

Die Laserstrahlungsquelle 6 ist zumindest in einer Koordinate entlang einer zu erzeugenden Schweißverbindung 8 verstellbar, was durch eine Pfeildarstellung symbolisiert ist. Flexibler arbeitet das System natürlich durch eine hier nicht dargestellte x-y-Verstelleinrichtung.

Ebenfalls nicht dargestellte Optiken dienen dazu, den Laserstrahl zu einer geeigneten Schweißgeometrie zu formen.

## Patentansprüche

1. Verfahren zum Fügen von Kunststoffbauteilen mittels Laserstrahlung, bei dem ein erstes dünnwandiges und eine Qualitätsoberfläche aufweisendes Kunststoffbauteil absorbierend für die Laserstrahlung ausgebildet ist und an einer, der Qualitätsoberfläche gegenüberliegenden Seite mit einem zweiten, für die Laserstrahlung transparenten Kunststoffbauteil im Durchstrahlverfahren verschweißt wird, **dadurch gekennzeichnet, dass** zur Verringerung des Temperaturgradienten zwischen den Kunststoffbauteilen beim Fügen das transparente Kunststoffbauteil zuvor aufgeheizt wird, so dass ein schnelleres, durch Wärmeleitung während des Fügens hervorgerufenes Aufschmelzen des transparenten Kunststoffbauteiles erfolgt und eine Wärmeausbreitung im absorbierenden Kunststoffbauteil in Richtung der Qualitätsoberfläche begrenzt wird.

2. Verfahren nach Anspruch 1, **dadurch gekennzeichnet, dass** das transparente Kunststoffbauteil durch eine separate Wärmequelle aufgeheizt wird.

3. Verfahren nach Anspruch 1, **dadurch gekennzeichnet, dass** das Material des transparenten Kunststoffbauteils so zusammengesetzt ist, dass die Aufheizung durch eine Teilabsorption der Laserstrahlung bzw. einer Laserwellenlänge hervorgerufen wird.

4. Verfahren nach einem der Ansprüche 1 bis 3, **dadurch gekennzeichnet, dass** das Durchstrahlschweißverfahren mit Laserstrahlung im Wellenlängenbereich von 700 - 1200 nm durchgeführt wird.

5. Verfahren nach Anspruch 4, **dadurch gekennzeichnet, dass** das Durchstrahlschweißverfahren mit einem breitbandigen NIR-Strahler durchgeführt wird.

6. Verfahren nach einem der Ansprüche 1 bis 5, **dadurch gekennzeichnet, dass** das transparente Kunststoffbauteil zur Verstärkung bzw. Versteifung des dünnwandigen Kunststoffbauteiles dient.

7. Verfahren nach einem der Ansprüche 1 bis 5, **dadurch gekennzeichnet, dass** das transparente Kunststoffbauteil zur Befestigung des dünnwandigen Kunststoffbauteiles dient.
